# EUROPÄISCHE PATENTSCHRIFT

(11) **EP 0 730 407 B1**
(45) Veröffentlichungstag und Bekanntmachung des Hinweises auf die Patenterteilung: **12.08.1998**
(21) Anmeldenummer: 95902078.5
(22) Anmeldetag: 17.11.1994
(51) Int. Cl.: A01N 37/44

(54) **VIRUSWIRKSAME SUBSTANZEN**
ANTI-VIRAL SUBSTANCES
SUBSTANCES AGISSANT SUR DES VIRUS

(30) Priorität: 25.11.1993 DE 4340124
(43) Veröffentlichungstag der Anmeldung: 11.09.1996
(73) Patentinhaber: Henkel-Ecolab GmbH & Co. OHG, 40554 Düsseldorf (DE)
(72) Erfinder: DISCH, Karl-Heinz, D-42871 Haan (DE); BANSEMIR, Klaus-Peter, D-40764 Langenfeld (DE); HACHMANN, Klaus, D-40723 Hilden (DE); VON RHEINBABEN, Friedrich, D-40597 Düsseldorf (DE)
(74) Vertreter: Hase, Christian, Dr.
(86) Internationale Anmeldenummer: EP9403812
(87) Internationale Veröffentlichungsnummer: WO9514382

(56) Entgegenhaltungen:
- EP-A- 0 156 275
- WO-A-94/25559

## Beschreibung

Aus der DE 34 10 956 A1 sind antimikrobielle Wirkstoffe bekannt, die erhältlich sind durch
1) Umsetzung von
   a) N-substituierten Propylendiaminen der Formel I,

      R¹ - NH - CH₂ - CH² - CH₂ - NH₂ (I)

      in der R¹ für einen linearen Alkylrest mit 12 bis 14 Kohlenstoffatomen steht, mit
   b) Verbindungen der Formel II, 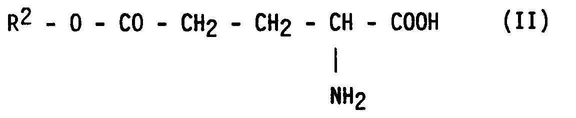 in der R² einen Alkylrest mit 1 bis 4 Kohlenstoffatomen oder ein Wasserstoffatom bedeutet, wobei das molare Verhältnis der Reaktionspartner a :b 1 : 1 bis 1 : 2 beträgt und die Reaktion unter Austritt von Alkohol und/oder Wasser im Verlauf von 0,5 bis 10 Stunden bei 60 bis 175 °C durchgeführt wird, und gegebenenfalls
2) weitere Umsetzung der nach 1) erhaltenen Produkte mit Ethylenoxid oder Propylenoxid unter an sich bekannten Alkoxylierungsbedingungen, sowie gegebenenfalls
3) Salzbildung der nach 1) oder 2) erhaltenen Produkte mit anorganischen oder organischen Säuren.

Aufgrund ihrer mikrobistatischen und mikrobiziden Wirkung gegenüber Bakterien und Pilzen eignen sich diese Wirkstoffe für die Lösung der verschiedenen Desinfektions- und Konservierungsaufgaben im nicht-therapeutischen Bereich. Zur Verwendung als Wirkstoff in antimikrobiellen Mitteln können sie in flüssige, pastenförmige oder feste Zubereitungen eingearbeitet werden. Derartige Mittel gelangen auf den verschiedensten Gebieten zum Einsatz, beispielsweise als Reinigungs-, Desinfektions- und Konservierungsmittel für Textilien, Fußböden, Krankenhauseinrichtungen, medizinische Instrumente, Schulen, Badeanstalten, öffentliche Verkehrsmittel, gewerbliche Betriebe, wie Molkereien, Brauereien und Wäschereien.

In der WO-A-94/25559, die zum Stand der Technik gemäß Artikel 54(3) zählt, wird auch die viruzide Wirkung der obengenannten Wirkstoffe an Textilien beschrieben.

Die Erfindung betrifft die Verwendung der vorstehend definierten Wirkstoffe auch als viruzide Wirkstoffe, mit Ausnahme der Verwendung an Textilien.

Bei bakteriziden oder fungiziden Wirkstoffen kann nicht grundsätzlich auch eine viruzide Wirksamkeit vorausgesetzt werden.

Bakterizide Mittel, z.B. alle gängigen, sogenannten wirksamen Bestandteile von Desinfektionsmitteln, sind nicht grundsätzlich auch viruzid. Häufig besitzen sie jedoch eine Teilviruzidie gegen behüllte lipophile Viren, also etwa gegen Newcastle Disease Virus, Herpesviren oder Vakziniavirus.

Ein derartiges teilviruzides Spektrum ist von einer Reihe von Tensiden, quaternären Ammoniumverbindungen und Biguaniden bekannt. Gegen lipophile, unbehüllte Viren, z.B. Adenovirus oder SV 40 Tumorvirus sind diese Substanzen aber entweder wirkungslos oder sie zeigen keine ausreichende Wirkung.

Der höchste Grad an Viruzidie wird nur von sehr wenigen Substanzen erreicht, z.B. von Aldehyden wie insbesondere Formaldehyd, Glutaraldehyd oder einigen Sauerstoff- oder Halogen-abspaltenden Substanzen. Diese würden auch die am schwersten zu inaktivierenden hydrophilen, unbehüllten Viren, wie z.B. Poliovirus zerstören.

Der bekannte Wirkstoff gemäß DE 34 10 956 A1 zeigte nun in Versuchen eine bisher nicht bekannte und nicht vorhersehbare gute Wirksamkeit sowohl gegen behüllte lipophile als auch gegen unbehüllte lipophile Viren (vergleiche Tabelle 1 und 2). Der als antimikrobiell bekannte Wirkstoff gemäß DE 34 10 956 A1 ist damit auch ein neuartiger viruzider Wirkstoff. Er ist unter vergleichbaren Bedingungen in seiner viruziden Leistung wesentlich besser als Vantocil^{(R)} (polymeres Biguanid der ICI) (vergleiche Tabelle 3). Dies gilt sowohl für Lösungen in Butyldiglycol als auch in Wasser.

### Zu den experimentellen Daten:

Die viruzide Leistung des Wirkstoffes gemäß DE 34 10 956 A1 sowie von Vantocil^{(R)} wurde nach der Methode der DVV (Bundesgesundheitsamt: Guidelines of Bundesgesundheitsamt (BGA; German Federal Health Office and Deutsche Vereinigung zur Bekämpfung der Viruskrankheiten e.V. (DVV: German Association für the Control of Virus Diseases) for Testing the Effectiveness of Chemical Disinfectants Against Viruses. Zbl. Hyg. 1990; 189: 554-62) an den folgenden Viren geprüft:
- Newcastle Disease Virus (NDV): lipophiles behülltes Virus
- Herpes Simplex Virus (HSV): lipophiles behülltes Virus
- Vakziniavirus (Vacc): lipophiles behülltes Virus
- Adenovirus (Adeno): lipophiles unbehülltes Virus
- SV40 Tumorvirus (SV40): lipophiles unbehülltes Virus

Die Ergebnisse der Prüfungen der genannten Substanzen bei Anwendungskonzentrationen zwischen 0,005 - 1 % sind in Tabellen 1 bis 3 für die obengenannten Viren zusammengefaßt. Die Zahlenwerte geben die Reduktionsfaktoren (log 10) gegenüber den jeweiligen Viren bei Einwirkungszeiten von 15, 30 und 60 Minuten wieder. In den Tabellen bedeuten:
- AWK: = Anwendungskonzentration
- EWZ: = Einwirkungszeit
- ohn: = ohne Eiweißbelastung
- FKS: = 10 % fötales Kälberserum als Eiweißbelastung
- RSA: = 0,2 Rinderserumalbumin als Eiweißbelastung
- n.a.: = nicht auswertbar
- AS:: = Aktivsubstanz

**Tabelle 1**

| Viruzidie von Wirkstoff gemäß DE 34 10 956 A1 (50 %-Variante mit Butyldiglycol als Lösungsmittel). Titerreduktion (log 10) der jeweils aufgeführten Viren unter den genannten Bedingungen (Einwirkungszeiten und anwendungskonzentrationen). | | | | | |
|---|---|---|---|---|---|
| Produkt | AWK(AS) in % | Virus | EWZ in Minuten | | |
| | | | 15 | 30 | 60 |
| Wirkstoff gemäß DE 34 10 956 | 0,005 | NDV | 2 | 2 | 2,3 |
| | 0,01 | | 1,5 | 2,2 | 2,3 |
| | 0,05 | | 2,3 | 2,4 | 2,2 |
| | 0,1 | | >4,5 | >4,5 | >4,5 |
| | 0,5 | | >4,5 | >4,5 | >4,5 |
| | 1,0 | | >3,5 | >3,5 | >3,5 |
| Wirkstoff gemäß DE 34 10 956 | 0,005 | HSV | 1 | 1,5 | 2 |
| | 0,01 | | 4,2 | >5 | >5 |
| | 0,05 | | >5 | >5 | >5 |
| | 0,1 | | >4 | >4 | >4 |
| | 0,5 | | >4 | >4 | >4 |
| | 1,0 | | >3 | >3 | >3 |
| Wirkstoff gemäß DE 34 10 956 | 0,005 | Vacc. | 2,5 | 2,5 | 2,9 |
| | 0,01 | | 2,9 | 2,9 | 3 |
| | 0,05 | | >3,5 | >3,5 | >3,5 |
| | 0,1 | | >3,5 | >3,5 | >3,5 |
| | 0,5 | | >2,5 | >2,5 | >2,5 |
| | 1,0 | | >2,5 | >2,5 | >2,5 |
| Wirkstoff gemäß DE 34 10 956 | 0,005 | Adeno | 0 | 0,2 | 2 |
| | 0,01 | | 1,4 | 1,2 | 2 |
| | 0,05 | | 3,5 | >4,5 | >4,5 |
| | 0,1 | | 3,4 | >3,5 | >3,5 |
| | 0,5 | | >3,5 | >3,5 | >3,5 |
| | 1,0 | | >2,5 | >2,5 | >2,5 |
| Wirkstoff gemäß DE 34 10 956 | 0,005 | SV40 | 2 | 2 | 2 |
| | 0,01 | | 2,3 | 1,8 | 2,3 |
| | 0,05 | | 3,3 | >4,5 | 3,9 |
| | 0,1 | | >3,5 | >3,5 | >3,5 |
| | 0,5 | | >3,5 | >3,5 | >3,5 |
| | 1,0 | | >3,5 | >3,5 | >3,5 |

**Tabelle 2**

| Viruzidie von Wirkstoff gemäß DE 34 10 956 A1 (33,3 %-Variante mit Wasser als Lösungsmittel). Titerreduktion (log 10) der jeweils aufgeführten Viren unter den genannten Bedingungen (Einwirkungszeiten und Anwendungskonzentration). | | | | | |
|---|---|---|---|---|---|
| Produkt | AWK (AS) in % | Virus | EWZ in Minuten | | |
| | | | 15 | 30 | 60 |
| Wirkstoff gemäß DE 34 10 956 | 0,005 | NDV | 1,5 | 2 | 2,2 |
| | 0,01 | | 2 | 2,2 | 2 |
| | 0,05 | | 1,5 | 2,4 | 1,7 |
| | 0,1 | | >4,5 | >4,5 | >4,5 |
| | 0,5 | | >4,5 | >4,5 | >4,5 |
| | 1,0 | | >3,5 | >3,5 | >3,5 |
| Wirkstoff gemäß DE 34 10 956 | 0,005 | HSV | 1,5 | 1,5 | 2,5 |
| | 0,01 | | 3,9 | 4,5 | >5 |
| | 0,05 | | >5 | >5 | >5 |
| | 0,1 | | >4 | >4 | >4 |
| | 0,5 | | >3 | >3 | >3 |
| | 1,0 | | >3 | >3 | >3 |
| Wirkstoff gemäß DE 34 10 956 | 0,005 | Vacc. | 2,8 | 3 | 3 |
| | 0,01 | | 2,9 | 3 | 3 |
| | 0,05 | | >3,5 | >3,5 | >3,5 |
| | 0,1 | | >3,5 | >3,5 | >3,5 |
| | 0,5 | | >2,5 | >2,5 | >2,5 |
| | 1,0 | | >2,5 | >2,5 | >2,5 |
| Wirkstoff gemäß DE 34 10 956 | 0,005 | Adeno | 0,5 | 1 | 1,8 |
| | 0,01 | | 1,2 | 1 | 2 |
| | 0,05 | | 1,5 | >3,5 | >3,5 |
| | 0,1 | | 1,9 | >3,5 | >3,5 |
| | 0,5 | | 2 | 2,5 | >3,5 |
| | 1,0 | | 2 | 2,3 | >2,5 |
| Wirkstoff gemäß DE 34 10 956 | 0,005 | SV40 | 1,8 | 2 | 1,8 |
| | 0,01 | | 1,9 | 2 | 2 |
| | 0,05 | | >3,5 | >3,5 | >3,5 |
| | 0,1 | | >3,5 | >3,5 | >3,5 |
| | 0,5 | | >3,5 | >3,5 | >3,5 |
| | 1,0 | | >3,5 | >3,5 | >3,5 |

**Tabelle 3**

| Viruzidie von Vantocil^{(R)} (20 %-Rohstoff). Titerreduktion (log 10) der jeweils aufgeführten Viren unter den genannten Bedingungen (Einwirkungszeiten und Anwendungskonzentrationen). | | | | | |
|---|---|---|---|---|---|
| Produkt | AWK (AS) in % | Virus | EWZ in Minuten | | |
| | | | 15 | 30 | 60 |
| Vantocil | 0,005 | HSV | 0 | 0 | 0 |
| | 0,01 | | 0 | 0 | 0 |
| | 0,05 | | 0,5 | 1,3 | 1,8 |
| | 0,1 | | 1,3 | 2 | 2,5 |
| | 0,5 | | 1,9 | 2,9 | >3,5 |
| | 1,0 | | 3,2 | >3,5 | >3,5 |
| Vantocil | 0,005 | Vacc. | 0,5 | 0,7 | 0,9 |
| | 0,01 | | 1,3 | 1,5 | 1,5 |
| | 0,05 | | 1,9 | 1,9 | 2,3 |
| | 0,1 | | 1,9 | 1,9 | 2,3 |
| | 0,5 | | 1 | 1 | 1,2 |
| | 1,0 | | 0,4 | 1,3 | 1,9 |
| Vantocil | 0,005 | Adeno | 0,5 | 0,5 | 0,5 |
| | 0,01 | | 0,5 | 0,7 | 0,8 |
| | 0,05 | | 1 | 1,7 | 1,9 |
| | 0,1 | | 1,2 | 1,8 | 1,9 |
| | 0,5 | | 1,7 | 1,8 | 1,9 |
| | 1,0 | | 1,7 | 1,5 | 1,5 |
| Vantocil | 0,005 | SV40 | 1 | 1,3 | 1,5 |
| | 0,01 | | 1,3 | 1,5 | 1,8 |
| | 0,05 | | n.a. | 1 | 1,5 |
| | 0,1 | | 1,4 | 1,5 | 2 |
| | 0,5 | | 1 | 1,8 | 1,7 |
| | 1,0 | | 1,3 | 2 | 2 |

Die fertigen viruziden Mittel können neben dem beschriebenen Wirkstoff in der Regel weitere üblicherweise verwendete Bestandteile enthalten, die je nach der vorgesehenen Anwendungsform und dem Anwendungszweck ausgewählt werden. Für flüssige Zubereitungen kommen als Lösungsmittel Wasser und übliche, sowohl wasserlösliche als auch schwer wasserlösliche organische Lösungsmittel, gegebenenfalls im Gemisch mit Wasser in Betracht. Zu diesen organischen Lösungsmitteln gehören vorzugsweise solche aus den Gruppen der aliphatischen und aromatischen Alkohole mit 1 bis 5 C-Atomen in den Alkylresten, der Glykole mit 2 bis 4 C-Atomen und der aus diesen ableitbaren Diglykole und Diglykolether. Derartige Lösungsmittel sind beispielsweise Methanol, Ethanol, Propanol, Isopropanol, Tert.-Butanol, Ethylenglykol, Propylenglykol, Butylenglykol, Diethylenglykol, Dipropylenglykol, Diethylenglykolmonomethylether, Diethylenglykolmonoethylether, Diethylenglykolmonopropylether und Diethylenglykolmonobutylether, insbesondere Butyldiglykol, aber auch Triethylacetat und Triethylcitrat. Will man zu klaren reinigenden viruziden Mitteln kommen, versetzt man zweckmäßigerweise über die sonstigen Lösungsmittel hinaus noch mit aromatischen Alkoholen wie Benzylalkohol und/oder 2-Phenoxyethanol und/oder 1-Phenoxypropanol. Bevorzugt wird ein Gemisch Benzylalkohol und 1-Phenoxypropanol, besonders bevorzugt im Mengenverhältnis von etwa 1 : 1. Durch Einsatz dieser Alkohole als Lösungsvermittler konnte der Klarpunkt der viruziden Mittel in üblichen Lösungsmitteln auf Temperaturen weit unter 20 °C gesenkt werden. Sie blieben über einen beobachteten Zeitraum von etwa 9 Monaten lagerstabil. Sie können in Mengen von etwa 3 bis 40, vorzugsweise etwa 10 bis 20 Gew.-% eingesetzt werden.

Wenn neben der viruziden Wirkung eine zusätzliche Reinigungswirkung erwünscht ist, können die Mittel nichtionische, anionische oder Amphotenside enthalten. Als nichtionische Tenside kommen beispielsweise Alkylpolyglykoside mit vorzugsweise 8 bis 22 C-Atomen im Alkylrest, Umsetzungsprodukte von 4 bis 40, vorzugsweise 4 bis 20 Moläquivalenten Ethylenoxid (EO) und/oder Propylenoxid (PO) mit Fettalkoholen, Fettsäuren, Fettaminen, Fettsäureamiden oder Alkansulfonamiden, deren Fettalkylreste vorzugsweise jeweils 8 bis 22-C-Atome enthalten, und mit Alkylphenolen sowie Aminoxide in Betracht. Auch die endgruppenverschlossenen Derivate derartiger Alkoxylierungsprodukte, vorzugsweise mit Endgruppen, die 2 bis 10-C-Atome enthalten, kommen in Frage. Von besonderem Interesse sind Anlagerungsprodukte von 5 bis 16 Mol Ethylenoxid am Kokos- oder Talgfettalkohole, an Oleylalkohol sowie an Mono-, Di- oder Trialkylphenole sowie an Monoalkylcyclohexanole mit 6 bis 14 Kohlenstoffatomen in den Alkylresten. Es kann vorteilhaft sein, mit den schaumärmsten Vertretern dieser Gruppe zu arbeiten. Zu derartigen nichtionischen Tensiden gehören beispielsweise die Handelsprodukte Dehypon ^{(R)} LS 24, LS 36, LS 45, LS 54, LT 24, LT 104 und LS 104, OCP 502 (Lieferant Henkel), Dehydol ^{(R)} LT 30 (Lieferant Henkel), Lutensol ^{(R)} LF 224, LT 30 (Lieferant BASF), Triton ^{(R)} CF 54 und DF 12 (Lieferant Röhm & Haas). Die Mengen der nichtionischen Tenside betragen etwa 3 bis 20, vorzugsweise etwa 5 bis 10 Gew.-%.

Zu den geeigneten Amphotensiden gehören Derivate tertiärer aliphatischer Amine oder quartärer aliphatischer Ammoniumverbindungen, deren aliphatische Reste geradkettig oder verzweigt sein können und von denen einer eine Carboxy-, Sulfo-, Phosphono-, Sulfato- oder Phosphato-Gruppe trägt. Beispiele für derartige Amphotenside sind Dimethyl-tetradecyl-glycin, Dimethyl-hexadecyl-glycin, Dimethyl-octadecyl-glycin, 3-(Dimethyl-dodecylam-monio)-1-propansulfonat und die unter den Bezeichnungen Dehyton ^{(R)} AB, CB und G (Lieferant Henkel) vertriebenen Amphotenside. Ihre Mengen betragen etwa 0 bis 10, vorzugsweise etwa 2 bis 5 Gew.-%.

Um auch bei Verwendung der erfindungsgemäßen Reinigungsmittelkonzentrate mit hartem Wasser eine klare Anwendungslösung und ein gutes Korrosionsverhalten zu gewährleisten, können die erfindungsgemäßen Reinigungs- und Desinfektionsmittel Komplexbildner bzw. Korrosionsinhibitoren enthalten. Diese werden vorzugsweise aus den Gruppen der Phosphonsäuren, Aminocarbonsäuren und deren Salzen, insbesondere deren Alkylisalzen, ausgewählt. Zu diesen Komplexierungsmitteln gehören beispielsweise die Alkali-, vorzugsweise die Natriumsalze der Methandiphosphonsäure, Hydroxyethan-1,1-diphosphonsäure, 1-Aminoethan-1,1-diphosphonsäure, Amino-trimethylenphosphonsäure), Ethylendiamin-tetra(methylenphosphonsäure), Diethylentriamin-penta(methylenphosphonsäure), 2-Phosphonobutan-1,2,4-tricarbonsäure, Nitrilotriessigsäure (NTA), Ethylendiamintetraessigsäure und Hydroxyethyl-ethylendiamintriessigsäure. Bevorzugt wird NTA. Als reiner Korrosionsinhibitor kann auch 1,2,3-Benzotriazol eingesetzt werden. Derartige Komplexbildner bzw. Korrosionsinhibitoren sind in den erfindungsmäßen Mitteln vorzugsweise in Mengen nicht über 6 Gew.-%, insbesondere etwa 0,5 Gew.-% bis 3 Gew.-%, enthalten.

Darüber hinaus können die erfindungsgemäßen Reinigungs- und Desinfektionsmittelkonzentrate in solchen Mitteln übliche Zusätze, wie Farbstoffe oder Duftstoffe, enthalten. Derartige übliche Zusatzstoffe sind in den erfindungsgemäßen Mitteln bevorzugt in Mengen nicht über 1 Gew.-% vorhanden.

Der Gehalt an der erfindungsgemäß verwendeten Wirkstoff gemäß DE 34 10 956 liegt in den anwendungsfertigen antimikrobiellen Mitteln zwischen 0,01 und 5 Gewichtsprozent, bezogen auf das gesamte Mittel. Für die Herstellung solcher gebrauchsfertiger Mittel können Konzentrate oder feste Mischungen zusammengestellt werden, die etwa 3 bis zu 50, vorzugsweise etwa 10 bis 25 Gewichtsprozent Wirkstoff enthalten.

## Patentansprüche

1. Verwendung von Substanzen, erhältlich durch
1) Umsetzung von
a) N-substituierten Propylendiaminen der Formel I,
R¹ - NH - CH₂ - CH₂ -CH₂ -NH₂ (I)
in der R¹ für einen linearen Alkylrest mit 12 bis 14 Kohlenstoffatomen steht, mit
b) Verbindungen der Formel II, 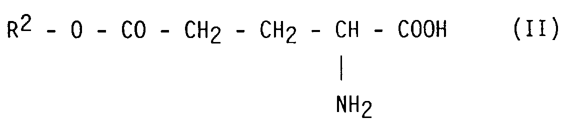 in der R² einen Alkylrest mit 1 bis 4 Kohlenstoffatomen oder ein Wasserstoffatom bedeutet, wobei das molare Verhältnis der Reaktionspartner a : b 1 : 1 bis 1 : 2 beträgt und die Reaktion unter Austritt von Alkohol und/oder Wasser im Verlauf von 0,5 bis 10 Stunden bei 60 bis 175 °C durchgeführt wird, und gegebenenfalls
2) weitere Umsetzung der nach 1) erhaltenen Produkte mit Ethylenoxid oder Propylenoxid unter an sich bekannten Alkoxylierungsbedingungen, sowie gegebenenfalls
3) Salzbildung der nach 1) oder 2) erhaltenen Produkte mit anorganischen oder organischen Säuren als viruzide Wirkstoffe, mit Ausnahme der Verwendung an Textilien.

## Claims

1. The use of substances obtainable by
1) reaction of
a) N-substituted propylenediamines corresponding to formula I:
R¹ - NH - CH₂ - CH₂ - CH₂ - NH₂ (I)
In which R¹ is a linear alkyl radical containing 12 to 14 carbon atoms, with
b) compounds corresponding to formula II: 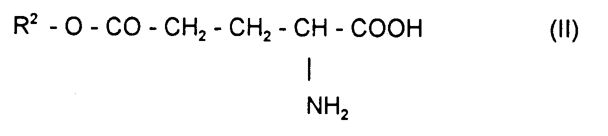 in which R² is an alkyl radical containing 1 to 4 carbon atoms or a hydrogen atom, the molar ratio of a) to b) being 1:1 to 1:2 and the reaction being carried out over a period of 0.5 to 10 hours at 60 to 175°C with elimination of alcohol and/or water, and optionally
2) further reaction of the products obtained in 1) with ethylene oxide or propylene oxide under alkoxylation conditions known per se and optionally
3) salt formation of the products obtained in 1) or 2) with inorganic or organic acids,
as virucidal agents, but not on textiles.

## Revendications

1. Utilisation de substances que l'on peut obtenir par :
1) réaction de
a) propylène diamines N-substituées de formule (I) :
R¹-NH-CH₂-CH₂-CH₂-NH₂ (I)
dans laquelle R¹ représente un radical alkyle linéaire ayant de 12 à 14 atomes de carbone, avec
b) des composés de formule (II) : 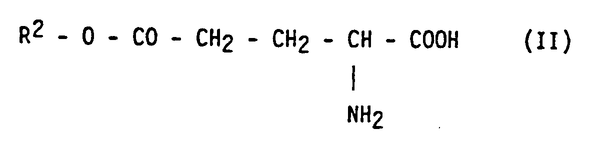 dans laquelle R² signifie un radical alkyle ayant de 1 à 4 atomes de carbone ou un hydrogène,
le rapport molaire des partenaires de la réaction a:b s'élevant de 1:1 à 1:2, et la réaction est effectuée sous évacuation d'alcool et/ou d'eau au cours de 0,5 à 10 heures, entre 60 et 175°C et
le cas échéant,
2) une autre réaction des produits obtenus selon 1) avec l'oxyde d'éthylène ou l'oxyde de propylène dans les conditions d'alkoxylation connues en soi ainsi que le cas échéant,
3) formation de sel des produits obtenus selon 1) ou 2) avec des acides minéraux ou organiques,
en tant que principes actifs virulicides, à l'exception de l'utilisation sur des textiles.
